# EUROPÄISCHE PATENTSCHRIFT

(11) **EP 1 405 764 B1**
(45) Veröffentlichungstag und Bekanntmachung des Hinweises auf die Patenterteilung: **14.09.2005**
(21) Anmeldenummer: 03014667.4
(22) Anmeldetag: 27.06.2003
(51) Int. Cl.: B60R 9/10, B60R 9/06

(54) **Lastenträger, insbesondere Fahrradträger**
Load carrier, particularly a bicycle carrier
Porte-charge, en particulier porte-bicyclette

(30) Priorität: 16.09.2002 DE 20214388 U
(43) Veröffentlichungstag der Anmeldung: 07.04.2004
(73) Patentinhaber: EUFAB Handelsgesellschaft für Auto- und Zweiradzubehör mbH, 42781 Haan (DE)
(72) Erfinder: van 't Ijssel, Evert, 8181 SM Heerde (NL)
(74) Vertreter: Paul, Dieter-Alfred

(56) Entgegenhaltungen:
- EP-A- 1 059 205
- DE-A- 4 315 292
- DE-A- 19 826 077
- US-A- 5 647 521
- US-A- 5 658 119
- US-A- 5 845 831
- US-B1- 6 401 999

## Beschreibung

Die Erfindung betrifft einen Lastenträger, insbesondere Fahrradträger, für Kraftfahrzeuge. Der Lastenträger hat folgende Merkmale:
a) der Lastenträger hat eine Kupplungseinrichtung für die Anbringung am Heck des Kraftfahrzeugs;
b) der Lastenträger hat ein davon ausgehendes Tragelement;
c) der Lastenträger ist mit einer Trageinrichtung für die Aufnahme einer Last versehen;
d) Tragelement und Trageinrichtung sind über ein Schwenkgelenk mit horizontaler Schwenkachse verbunden;
e) es ist eine Verriegelungseinrichtung vorhanden;
f) die Verriegelungseinrichtung ist so ausgebildet, daß sie in einer Verriegelungsstellung die Trageinrichtung in einer Normalposition blockiert und in einer Entriegelungsstellung ein Abklappen der Trageinrichtung um die Schwenkachse in eine Abklapposition erlaubt;
g) der Abklappwinkel ist durch einen Endanschlag begrenzt.

Ein solcher Lastenträger ist beispielsweise in der DE 43 15 292 A1 offenbart. Der Lastträger ist zweiteilig aufgebaut. Er hat eine Kupplungseinrichtung für die Anbringung am Heck eines Kraftfahrzeuges, von der ein Tragelement ausgeht. An diesem Tragelement ist eine Trageinrichtung über ein Schwenkgelenk mit horizontaler Schwenkachse angelenkt. Auf der Trageinrichtung können Lasten befestigt werden, beispielsweise Fahrräder.

In der Normalposition erstreckt sich die Trageinrichtung im wesentlichen horizontal. Eine Verriegelungseinrichtung blockiert die Trageinrichtung in dieser Position. Damit die Heckklappe des Kraftfahrzeugs auch dann geöffnet werden kann, wenn auf der Trageinrichtung Fahrräder befestigt sind, kann die Trageinrichtung um die Schwenkachse soweit abgeklappt werden, daß die Heckklappe nicht mit den auf der Trageinrichtung stehenden Rädern kollidiert. Hierzu wird die Verriegelungseinrichtung in eine Entriegelungsstellung gebracht. Dadurch kommt die Trageinrichtung frei und kann um einen bestimmten Abklappwinkel nach unten verschwenken. Ein Endanschlag begrenzt diesen Abklappwinkel.

Lastenträger der vorbeschriebenen Art sind auch in ähnlicher Ausführungsform bekannt. Sie unterscheiden sich von dem in der DE 43 15 292 offenbarten Lastenträger im wesentlichen dadurch, daß die Kupplungseinrichtung für die Anbringung an einer Anhängerkupplung ausgebildet ist.

Die bekannten Lastenträger der vorbeschriebenen Art sind konstruktiv aufwendig gestaltet und deshalb teuer. Außerdem ist ihre Sicherheit nicht optimal. Der Erfindung liegt somit die Aufgabe zugrunde, einen Lastenträger der eingangs genannten Art so auszubilden, daß er kostengünstig herstellbar ist und trotzdem eine gute Sicherheit bietet.

Diese Aufgabe wird erfindungsgemäß dadurch gelöst, daß die Trageinrichtung einen Tragrahmen und einen von dem Schwenkgelenk in Richtung auf die Kupplungseinrichtung gehenden Rahmenträger aufweist, an dessen freien Ende der Tragrahmen gehaltert ist. Dabei ist es besonders vorteilhaft, wenn der Tragrahmen in der Normalposition auf dem Tragelement aufliegt. Der erfindungsgemäße Lastenträger zeichnet sich durch einfachen Aufbau und damit kostengünstige Herstellung aus. Das Schwenkgelenk unterliegt geringeren Belastungen als bei den bekannten abklappbaren Lastenträgern. Dies gilt insbesondere dann, wenn der Tragrahmen in der Normalposition auf dem Tragelement aufliegen kann und auf diese Weise direkt von dem Tragelement getragen wird.

In Ausbildung der Erfindung ist vorgesehen, daß die Achse des Schwenkgelenks nicht mehr als 10 cm unterhalb der Auflage für den Tragrahmen liegen soll. Das Tragelement kann zwei parallel im Abstand zueinander verlaufende Tragstreben aufweisen, zwischen denen sich das Schwenkgelenk erstreckt, so daß es von den Tragstreben beidseitig eingefaßt ist. Dabei kann der Rahmenträger so ausgebildet sein, daß er in Normalposition im Tragelement seitlich geführt ist, d.h. in der Normalposition überlappen sich Rahmenträger und Tragelemente und liegen aneinander an. Auch dies dient der Entlastung des Schwenkgelenks.

Besonders vorteilhaft ist es, wenn der Rahmenträger lösbar mit dem Tragrahmen verbunden ist. Auf diese Weise können an dem Rahmenträger auch unterschiedliche Tragrahmen angebracht werden, wobei für die Anpassung Adapter vorgesehen sein können. Auf diese Weise ist die erfindungsgemäße Konstruktion besonders vielseitig einsetzbar.

Nach einem weiteren Merkmal der Erfindung ist vorgesehen, daß die Verriegelungseinrichtung ein Fangelement aufweist, das derart ausgebildet ist, daß es nach verschwenken der Trageinrichtung in die Abklapposition mit dem Endanschlag in Eingriff kommt. Das Fangelement kann beispielsweise als Fanghaken ausgebildet sein. Besonders zweckmäßig ist es, wenn das Fangelement Teil eines Verriegelungshebels ist und dieser nur so weit aus der Verriegelungsstellung in die Entriegelungsstellung verschwenkbar ist, daß gesichert ist, daß beim Abklappen der Trageinrichtung Fangelement und Endanschlag in Eingriff kommen.

Grundsätzlich kann der Verriegelungshebel der Verriegelungseinrichtung auch an dem Tragelement angeordnet sein. Eine zweckmäßige Ausführungsform ergibt sich aber, wenn der Verriegelungshebel an der Trageinrichtung schwenkbar gelagert ist, und zwar vorzugsweise an dem Rahmenträger. Der Verriegelungshebel kann zur besseren Handhabung mit einem Betätigungshebel verbunden sein. Zur Erhöhung der Sicherheit der Verriegelungsstellung sollte der Verriegelungshebel und/oder Betätigungshebel in der Verriegelungsstellung durch eine Sperre blockiert sein. Hierbei kann es sich um eine den Verriegelungshebel oder Betätigungshebel umschließende Lasche oder ein Schloß handeln.

Ein weiteres Merkmal der Erfindung besteht darin, daß der Verriegelungshebel in Richtung auf die verriegelungsstellung federbelastet ist. Auch dies dient der Sicherheit. Dabei ist es besonders vorteilhaft, wenn die Verriegelungseinrichtung derart ausgebildet ist, daß sie beim Hochklappen der Trageinrichtung in die Normalposition selbsttätig, beispielsweise aufgrund der Federbelastung, in die Verriegelungsstellung bewegt wird. Auf diese Weise ist gesichert, daß die Verriegelungseinrichtung beim Hochklappen der Trageinrichtung die Verriegelungsstellung einnimmt und die Trageinrichtung ohne weitere Betätigung blockiert.

Nach der Erfindung ist ferner vorgesehen, daß der Endanschlag ein Verriegelungselement der verriegelungseinrichtung bildet. Dabei kann das Verriegelungselement als Stegprofil ausgebildet sein.

In der Zeichnung ist die Erfindung anhand eines Ausführungsbeispiels näher veranschaulicht. Es zeigen:
- Figur 1: eine Seitenansicht eines Teils des erfindungsgemäßen Fahrradträgers in der Normalposition und
- Figur 2: die Darstellung gemäß Figur 1 in der Abklapposition.

Der in den Figuren nur teilweise dargestellte Fahrradträger 1 weist ein Tragelement 2 auf, das aus einer Querplatte 3 und zwei nach hinten auskragenden Tragstreben 4 besteht, die im Abstand senkrecht zu Zeichnungsebene hintereinander angeordnet und parallel zueinander verlaufen. An die freie Seite der Querplatte 3 schließt sich nach vorn eine hier nicht dargestellte Kupplungseinrichtung, an, die für die Anbringung an einer Anhängerkupplung ausgebildet sein kann. Sie kann aber auch für die direkte Anbringung am Heck eines Kraftfahrzeuges ausgestattet sein, wie dies beispielsweise der DE 43 15 292 A1 zu entnehmen ist.

Zwischen den freien Enden der Tragstreben 4 erstreckt sich horizontal ein Schwenkgelenk 5. Es wird endseitig von den Tragstreben 4 gehalten. An dem Schwenkgelenk 5 angelenkt ist eine Trageinrichtung 6. Die Trageinrichtung 6 hat einen Tragrahmen 7, von dem hier nur ein Querträger 8 eingezeichnet ist. Der Tragrahmen 7 erstreckt sich von dem Querträger 8 nach hinten in Richtung auf das Schwenkgelenk 5 und darüber hinaus. Auf dem Tragrahmen 7 sind Befestigungseinrichtungen für die aufrechte Fixierung von Fahrrädern vorgesehen.

Der Querträger 8 ist mit dem freien Ende eines Rahmenträgers 9 verbunden. Der Rahmenträger 9 ist an dem Schwenkgelenk 5 angelenkt. Um das Schwenkgelenk 5 kann die Trageinrichtung 6 nach oben verschwenkt werden.

An dem Rahmenträger 9 ist ein Verriegelungshebel 10 angebracht. Er ist um eine horizontale Achse 11 verschwenkbar und ist durch eine hier nicht näher dargestellte Feder im Uhrzeigersinn federbelastet. Der Verriegelungshebel 10 erstreckt sich nach unten und hat dort einen als Klinke 12 ausgebildeten Einschnitt. Das untere Ende des Verriegelungshebels 10 ist als Fanghaken 13 ausgebildet.

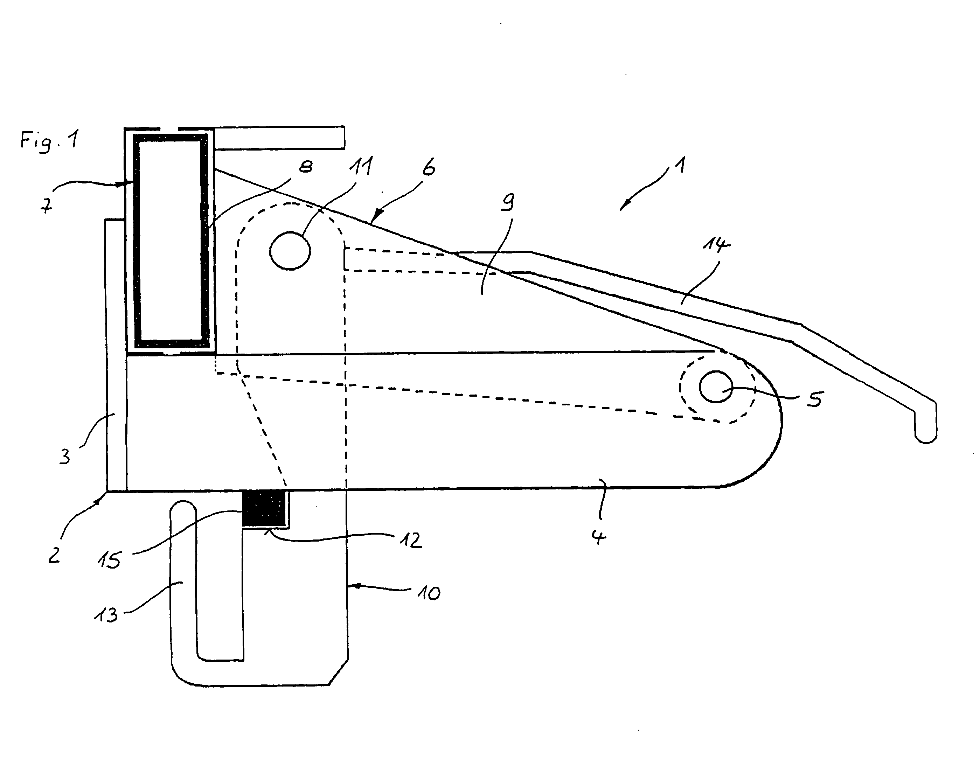

Mit dem oberen Ende des Verriegelungshebels 10 ist ein Betätigungshebel 14 fest verbunden. Über den Betätigungshebel 14 kann der Verriegelungshebel 10 betätigt werden. Eine hier nicht näher dargestellte, im Stand der Technik bekannte Sperre sorgt dafür, daß der Betätigungshebel 14 in der in Figur 1 dargestellten Position blockiert ist. Erst nach Entfernen der Sperre kann der Verriegelungshebel 10 verschwenkt werden.

In Figur 1 befindet sich die Trageinrichtung 6 in Normalposition. In dieser Position ruht der Querträger 8 des Tragrahmens 7 auf der Oberseite der Tragstreben 4. In diesem Bereich können die Tragstreben 4 mit Gummipuffern versehen sein. Der Verriegelungshebel 10 unterfaßt mit seiner Klinke 12 einen Verriegelungssteg 15, der an der Unterseite der Tragstreben 4 angebracht ist und sich zwischen diesen beiden erstreckt. Dabei können Klinke 12 und Verriegelungssteg 15 auch leicht konisch ausgebildet sein, damit es zu einer spielfreien Anlage der Klinke 12 an dem Verriegelungssteg 15 kommt.

Zum Abklappen der Trageinrichtung 6 wird zunächst die oben erwähnte Sperre von dem Betätigungshebel 14 entfernt. Dann wird der Betätigungshebel 14 nach oben geschwenkt. Hierdurch wird der Verriegelungshebel 10 gegen den Uhrzeigersinn soweit verdreht, daß Klinke 12 und Verriegelungssteg 15 außer Eingriff kommen. Der Schwenkwinkel des Verriegelungshebels 10 wird dadurch begrenzt, daß der Fanghaken 13 soweit hochgezogen ist, daß er beim Verschwenken des Verriegelungshebels 10 gegen den Verriegelungssteg 15 anstößt.

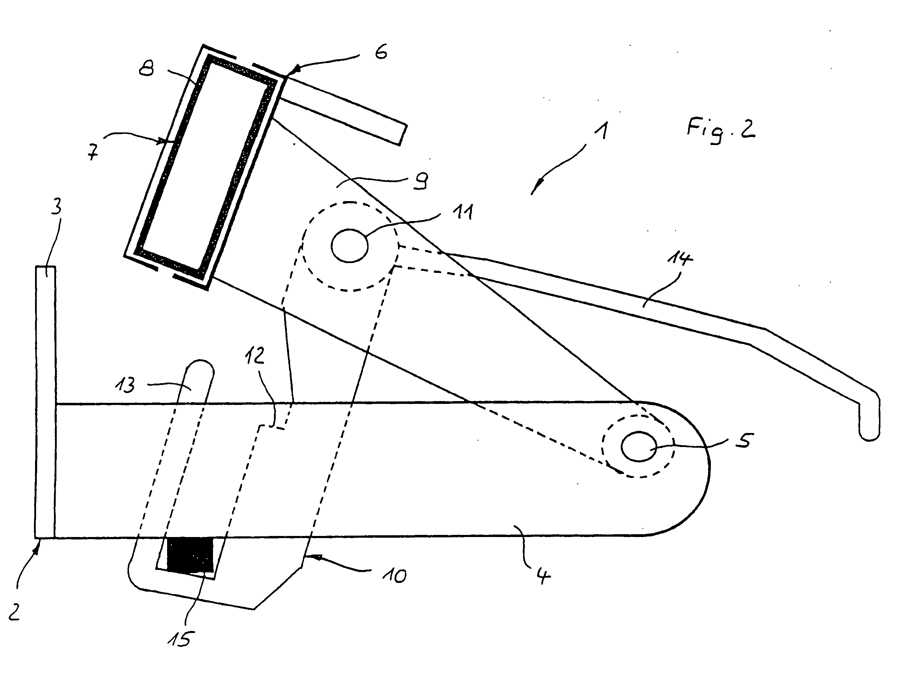

Im Anschluß daran kann der Tragrahmen 7 um das Schwenkgelenk 5 in die in Figur 2 dargestellte Abklapposition verschwenkt werden. Der Abklappwinkel wird dadurch beschränkt, daß der Fanghaken 13 an der Unterseite des Verriegelungssteges 15 zur Anlage kommt. In dieser Position kann die Heckklappe des Kraftfahrzeuges, an dem der Fahrradträger 1 montiert ist, geöffnet werden, ohne daß sie mit den auf dem Tragrahmen 7 fixierten Fahrrädern kollidiert.

Zum Erreichen der Normalposition wird die Trageinrichtung 6 wieder entgegen dem Uhrzeigersinn soweit verschwenkt, bis der Querträger 8 auf den Tragstreben 4 aufsetzt. Auf diese Weise kommt die Klinke 12 in Eingriffsposition mit dem Verriegelungssteg 15. Da der Verriegelungshebel 10 im Uhrzeigersinn federbelastet ist, klappt die Klinke 12 selbsttätig unter den Verriegelungssteg 15 und blockiert auf diese Weise die Trageinrichtung 6 in der Normalposition gemäß Figur 1.

## Patentansprüche

1. Lastenträger (1), insbesondere Fahrrädträger, für Kraftfahrzeuge;
a) der Lastenträger (1) hat eine Kupplungseinrichtung für die Anbringung am Heck des Kraftfahrzeugs;
b) der Lastenträger (1) hat ein davon ausgehendes Tragelement (2);
c) der Lastenträger (1) ist mit einer Trageinrichtung (6) für die Aufnahme einer Last versehen;
d) Tragelement (2) und Trageinrichtung (6) sind über ein Schwenkgelenk (5) mit horizontaler Schwenkachse verbunden;
e) es ist eine Verriegelungseinrichtung (10, 15) vorhanden;
f) die Verriegelungseinrichtung (10, 15) ist so ausgebildet, daß sie in einer Verriegelungsstellung die Trageinrichtung (6) in einer Normalposition blockiert und in einer Entriegelungsstellung ein Abklappen der Trageinrichtung (6) um die Schwenkachse in eine Abklapposition erlaubt;
g) der Abklappwinkel ist durch einen Endanschlag (15) begrenzt;
**gekennzeichnet durch folgende Merkmale:**
h) die Trageinrichtung (6) weist einen Tragrahmen (7) und einen von dem Schwenkgelenk (5) in Richtung auf die Kupplungseinrichtung gehenden Rahmenträger (9) auf;
i) der Tragrahmen (7) ist an dem freien Ende des Rahmenträgers (9) gehaltert.

2. Lastenträger nach Anspruch 1, **dadurch gekennzeichnet, daß** der Tragrahmen (7) in der Normalposition auf dem Tragelement (2) aufliegt.

3. Lastenträger nach Anspruch 2, **dadurch gekennzeichnet, daß** die Achse des Schwenkgelenks (5) nicht mehr als 10 cm unterhalb der Auflage für den Tragrahmen (6) liegt.

4. Lastenträger nach einem der Ansprüche 1 bis 3, **dadurch gekennzeichnet, daß** das Tragelement (2) zwei parallel im Abstand zueinander verlaufende Tragstreben (4) aufweist, zwischen denen sich das Schwenkgelenk (5) erstreckt.

5. Lastenträger nach einem der Ansprüche 1 bis 4, **dadurch gekennzeichnet, daß** der Rahmenträger (9) in Normalposition an dem Tragelement (2) seitlich geführt ist.

6. Lastenträger nach einem der Ansprüche 1 bis 5, **dadurch gekennzeichnet, daß** der Rahmenträger (9) lösbar mit dem Tragrahmen (6) verbunden ist.

7. Lastenträger nach einem der Ansprüche 1 bis 6, **dadurch gekennzeichnet, daß** die Verriegelungseinrichtung (10, 15) ein Fangelement (13) aufweist, das derart ausgebildet ist, daß es nach Verschwenken der Trageinrichtung (6) in die Abklapposition mit dem Endanschlag (15) in Eingriff kommt.

8. Lastenträger nach Anspruch 7, **dadurch gekennzeichnet, daß** das Fangelement als Fanghaken (13) ausgebildet ist.

9. Lastenträger nach Anspruch 7 oder 8, **dadurch gekennzeichnet, daß** das Fangelement (13) Teil eines Verriegelungshebels (10) ist und dieser nur so weit aus der Verriegelungsstellung in die Entriegelungsstellung verschwenkbar ist, daß gesichert ist, daß beim Abklappen der Trageinrichtung (6) Fangelement (13) und Endanschlag (15) in Eingriff kommen.

10. Lastenträger nach einem der Ansprüche 1 bis 9, **dadurch gekennzeichnet, daß** die Verriegelungseinrichtung einen Verriegelungshebel (10) aufweist, der an der Trageinrichtung (6) schwenkbar gelagert ist.

11. Lastenträger nach Anspruch 9 oder 10, **dadurch gekennzeichnet, daß** der Verriegelungshebel (10) mit einem Betätigungshebel (14) verbunden ist

12. Lastenträger nach einem der Ansprüche 9 bis 11, **dadurch gekennzeichnet, daß** der Verriegelungshebel (10) und/oder der Betätigungshebel (14) in der Verriegelungsstellung durch eine Sperre blockierbar ist.

13. Lastenträger nach einem der Ansprüche 9 bis 12, **dadurch gekennzeichnet, daß** der Verriegelungshebel (10) in Richtung auf die Verriegelungsstellung federbelastet ist.

14. Lastenträger nach einem der Ansprüche 1 bis 13, **dadurch gekennzeichnet, daß** die Verriegelungseinrichtung (10, 15) derart ausgebildet ist, daß sie beim Hochklappen der Trageinrichtung (6) in die Normalposition selbsttätig in die Verriegelungsstellung bewegt wird.

15. Lastenträger nach einem der Ansprüche 1 bis 14, **dadurch gekennzeichnet, daß** der Endanschlag (15) ein Verriegelungselement der Verriegelungseinrichtung bildet.

16. Lastenträger nach Anspruch 15, **dadurch gekennzeichnet, daß** das Verriegelungselement (15) als Stegprofil ausgebildet ist.

## Claims

1. Load carrier (1), in particular bicycle carrier, for motor vehicles;
a) the load carrier (1) has a coupling mechanism for mounting on the tail of the motor vehicle;
b) the load carrier (1) has a carrying element (2) outgoing from it;
c) the load carrier (1) is provided with a carrying device (6) for taking up a load;
d) the carrying element (2) and the carrying device (6) are connected by a pivoting joint (5) with a horizontal pivoting shaft;
e) a locking device (10, 15) is present;
f) the locking device (10, 15) is configured in such a way that it locks the carrying device (6) in a normal position when in the locked position and allows the pivoting down of the carrying device (6) around the pivoting axis into a pivoted down position when in the unlocked position;
g) the pivoting down angle is limited by an end stop (15); **characterized in that**
h) the carrying mechanism (6) exhibits a support frame (7) and a frame support (9) going from the pivoting joint (5) in the direction of the clutch device;
i) the support frame (7) is held at the free end of the frame support (9).

2. Load carrier according to claim 1, **characterized in that** the support frame (7) rests upon the carrying element (2) in the normal position.

3. Load carrier according to claim 2, **characterized in that** the shaft of the pivoting joint (5) is located no more than 10 cm below the rest of the support frame (6).

4. Load carrier according to one of the claims 1 to 3, **characterized in that** the carrying element (2) exhibits two parallel carrying props (4) running at a distance to each other, between which the pivoting joint (5) extends.

5. Load carrier according to one of the claims 1 to 4, **characterized in that** the frame support (9) is guided laterally in the normal position on the carrying element (2).

6. Load carrier according to one of the claims 1 to 5, **characterized in that** the frame support (9) is connected detachable to the support frame (6).

7. Load carrier according to one of the claims 1 to 6, **characterized in that** the locking device (10, 15) contains a catch element (13) that is configured in such a manner that it comes in joining with the end stop (15) after swivelling the carrying device (6) into the pivoted down position.

8. Load carrier according to claim 7, **characterized in that** the catch element is designed as a catch hook (13).

9. Load carrier according to claims 7 or 8, **characterized in that** the catch element (13) is part of a locking lever (10) and it is pivotable only so far from the locking position into the unlocking position so that it is secured that when pivoting down the carrying device (6), the catch element (13) and the end stop (15) come into joining.

10. Load carrier according to one of the claims 1 to 9, **characterized in that** the locking device contains a locking lever (10) which is pivotably connected to the carrying device (6).

11. Load carrier according to claim 9 or 10, **characterized in that** the locking lever (10) is connected to a control lever (14).

12. Load carrier according to one of the claims 9 to 11, **characterized in that** the locking lever (10) and/or the control lever (14) are lockable in the locking position by a lock.

13. Load carrier according to one of the claims 9 to 12, **characterized in that** the locking lever (10) is tensioned by a spring in the direction of the locking position.

14. Load carrier according to one of the claims 1 to 13, **characterized in that** the locking device (10, 15) is configured in such a manner that it is moved automatically into the normal position when lifting the carrying device (6) into the locked position.

15. Load carrier according to one of the claims 1 to 14, **characterized in that** the end stop (15) forms a locking element of the locking device.

16. Load carrier according to claim 15, **characterized in that** the locking element (15) is configured as a bar profile.

## Revendications

1. Porte-charge (1), notamment un porte-bicyclette, pour automobiles;
a) le porte-charge (1) a un mécanisme de couplage pour le montage sur l'arrière de l'automobile;
b) le porte-charge (1) a un élément portant (2) sortant de lui;
c) le porte-charge (1) est pourvu d'un dispositif portant (6) pour accepter une charge;
d) élément portant (2) et le dispositif portant (6) sont liés par une articulation pivotante (5) à une tige pivotante horizontale;
e) il y a un dispositif de blocage (10, 15);
f) le dispositif de blocage (10, 15) a une configuration de telle sorte qu'il bloque le dispositif portant (6) dans une position normale quand il est dans la position bloquée et permet au dispositif portant (6) de pivoter en bas autour de l'axe pivotant jusqu'à une position pivotée en bas quand il est dans la position débloquée;
g) l'angle de rotation en bas est limité par un butoir d'arrêt (15); **caractérise en ce que**:
h) le mécanisme portant (6) comporte un cadre-support (7) et un support-cadre (9) qui se déplace de l'articulation pivotante (5) dans la direction du dispositif d'accrochage;
i) le cadre-support (7) est logé à l'extrémité libre du support-cadre (9).

2. Porte-charge selon la revendication 1, **caractérisé en ce que** le cadre-support (7) s'appuie sur l'élément portant (2) dans la position normale.

3. Porte-charge selon la revendication 2, **caractérisé en ce que** la tige de l'articulation pivotante (5) est placé à 10 cm au plus sous le repos pour le cadre-support (6).

4. Porte-charge selon l'une des revendications de 1 à 3, **caractérisé en ce que** l'élément portant (2) comporte deux appuis portantes parallèles (4) écartés l'un de l'autre à une distance, entre laquelle s'étend l'articulation pivotante (5).

5. Porte-charge selon l'une des revendications de 1 à 4, **caractérisé en ce que** le support-cadre (9) est guidé latéralement à la position normale dans élément portant (2).

6. Porte-charge selon l'une des revendications de 1 à 5, **caractérisé en ce que** le support-cadre (9) est lié fermement au cadre-support (6).

7. Porte-charge selon l'une des exigences de 1 à 6, **caractérisé en ce que** le dispositif de blocage (10, 15) comporte un élément d'accrochage (13) qui est configuré de telle manière qu'il arrive à se joindre au butoir d'arrêt (15) après avoir tourné le dispositif portant (6) dans la position pivotée en bas.

8. Porte-charge selon l'exigence 7, **caractérisé en ce que** l'élément d'accrochage est conçu comme un crochet d'accrochage (13).

9. Porte-charge selon l'exigence 7 ou 8, **caractérisé en ce que** l'élément d'accrochage (13) est une partie du levier de blocage (10) et il est capable de pivoter de la position bloquée dans la position débloquée seulement jusqu'il est assuré que, quand le dispositif portant (6) est pivoté en bas, l'élément d'accrochage (13) et le butoir d'arrêt (15) arrivent à se joindre.

10. Porte-charge selon l'une des revendications de 1 à 9, **caractérisé en ce que** le dispositif de blocage comporte un levier de blocage (10), qui est lié par un pivot au dispositif portant (6).

11. Porte-charge selon la revendication 9 ou 10, **caractérisé en ce que** le levier de blocage (10) est lié à un levier de contrôle (14).

12. Porte-charge selon l'une des revendications de 9 à 11, **caractérisé en ce qu'**il est possible que le levier de blocage (10) et/ou le levier de contrôle (14) soit bloqué dans la position de blocage par un verrou.

13. porte-charge selon l'une des revendications de 9 à 12, **caractérisé en ce que** le levier de blocage (10) est tendu par un ressort dans la direction de la position de blocage.

14. Porte-charge selon l'une des revendications de 1 à 13, **caractérise en ce que** le dispositif de blocage (10, 15) est configuré de telle manière qu'il se place automatiquement dans la position normale quand le dispositif portant (6) est levé dans la position bloquée.

15. Porte-charge selon l'une des revendications de 1 à 14, **caractérisé en ce que** le butoir d'arrêt (15) constitue un élément de blocage du dispositif de blocage.

16. Porte-charge selon la revendication 15, **caractérisé en ce que** l'élément de blocage (15) est configuré comme un profile de barre qui est mobile.
